# EUROPEAN PATENT APPLICATION

(11) **EP 4 780 033 A1**
(43) Date of publication of application: **22.07.2026**
(21) Application number: 25151899.9
(22) Date of filing: 15.01.2025
(51) Int. Cl.: H04W 12/00, H04W 12/041, H04W 12/30, H04W 12/0431, H04W 12/069, H04W 4/70

(54) **METHOD FOR MANUFACTURING AN EUICC DEVICE**

(71) Applicant: Giesecke+Devrient Mobile Security Germany GmbH, 81677 München (DE)
(72) Inventor: Schnellinger, Michael, 81677 Munich (DE); Perarnau, Xavier, 81677 Munich (DE)
(74) Representative: Giesecke+Devrient IP

(57) **Abstract**

Method for manufacturing an embedded universal integrated circuit card (eUICC) device, said method comprising:
a) the step of conducting a data generation step, in which a so-called master key is generated and so-called In-Factory Provisioning (IFPP) management keys are derived from the master key;
b) the step of transferring the master key and/or the IFPP management keys to an In-Factory Provisioning (IFPP) server;
c) the step of providing a device for communication in a mobile communication network, said device comprising an eUICC;
d) the step of providing the eUICC with a script, namely a so-called preScript, containing data in a protected form, wherein said data are encrypted by the IFPP management keys and are required to set the eUICC to the In-Factory mode;
e) the step of providing the eUICC with a Bound Profile Package (BPP);
f) the step of providing the eUICC with a script, namely a so-called postScript, in order to remove the data inserted by the preScript;
g) the step of collecting at least the installation results of steps e) and f) and forwarding the collected data to the IFPP server.

## Description

The invention pertains to a method for manufacturing an embedded universal integrated circuit card (eUICC) device.

The concept of In-Factory Profile Provisioning (IFPP) is an emerging technology being used to streamline the process of embedding cellular Subscriber Identity Module (SIM) profiles into Internet of Things and other connected devices, reducing operational costs and improving performance.

In-Factory Profile Provisioning (IFPP) is a mechanism for the secure loading of mobile network SIM profiles during the manufacturing and/or order fulfilment process based on characteristics such as the device capabilities or the geographic location into which it is expected to be deployed. The use of IFPP removes the need to manually fit plastic SIM cards into each device and offers an alternative to in-field provisioning which may not be appropriate for many forms of devices.

The benefits of IFPP can be categorised in terms of improving the in-bound and out-bound logistics associated with SIMs (including removing the need to maintain and manage a large inventory of plastic SIM cards), streamlining the process of applying the SIM profile (by removing the manual step of inserting a card), and reducing the power consumption associated with in-field provisioning.

Several categories of mobile communication devices are known, including consumer mobile communication devices such as smartphones and companion devices (e.g. smartwatches) to smartphones, automotive mobile communication devices that can be hosted in automobiles like cars or trucks, IoT mobile communication devices connecting things in the Internet of Things, IoT.

The GSM Association, GSMA, publishes several industry specifications which are formally non-binding permanent reference documents of the GSMA, however in the industry they are considered as de-facto standards.

Most market participants engaging in the field of mobile communication networks, particularly mobile network operators and mobile communication device manufacturers, request that eUICCs are compliant with the GSMA specifications.

SGP.22 GSMA RSP Technical Specification Version 3.1 describes procedures for provisioning profiles to eUICCs hosted in consumer mobile communication devices, and for managing profiles in eUICCs, for example by enabling, disabling and deleting profiles.

Currently, In-Factory Profile Provisioning can be carried out in-field, too, since so far there is no appropriate way to disable this course of action.

There is a need to disable the In-Factory Profile Provisioning in-field while enabling the original equipment manufacturer (OEM) to enable the In-Factory Profile Provisioning again, for example, at a restoration site.

The present invention addresses the above object by the subject-matter covered by the independent claim. Preferred embodiments of the invention are defined in the dependent claims.

### SUMMARY OF THE INVENTION

1. (First aspect of the invention) Method for manufacturing an embedded universal integrated circuit card (eUICC) device, said method comprising:
   a) the step of conducting a data generation step, in which a so-called master key is generated and so-called In-Factory Provisioning (IFPP) management keys are derived from the master key;
   b) the step of transferring the master key and/or the IFPP management keys to an In-Factory Provisioning (IFPP) server;
   c) the step of providing a device for communication in a mobile communication network, said device comprising an eUICC;
   d) the step of providing the eUICC with a script, namely a so-called preScript, containing data in a protected form, wherein said data are encrypted by the IFPP management keys and are required to set the eUICC to the In-Factory mode;
   e) the step of providing the eUICC with a Bound Profile Package (BPP);
   f) the step of providing the eUICC with a script, namely a so-called postScript, in order to remove the data inserted by the preScript;
   g) the step of collecting at least the installation results of steps e) and f) and forwarding the collected data to the IFPP server.
2. (Preferred embodiment) Method according to clause 1, wherein in step a) the master key is an Advanced Encryption Standard (AES) key.
3. (Preferred embodiment) Method according to clause 1 or 2, wherein in step a) the IFPP keys are derived from the master key and an EID.
4. (Preferred embodiment) Method according to clause 3, wherein the IFPP keys contain three key components, namely ENC, MAC and DEK key, as specified in GlobalPlatform Technology Secure Channel Protocol '03' Card Specification v2.3 - Amendment D Version 1.1.2 Public Release March 2019.
5. (Preferred embodiment) Method according to clause 1 or 2, wherein in step a) the IFPP keys are randomly generated Secure Channel Protocol '03' keys as specified in GlobalPlatform Technology Secure Channel Protocol '03' Card Specification v2.3 - Amendment D Version 1.1.2 Public Release March 2019.

### DESCRIPTION OF THE PREFERRED EMBODIMENTS

The present invention provides a method for manufacturing an embedded universal integrated circuit card (eUICC) device, said method comprising:
a) the step of conducting a data generation step, in which a so-called master key is generated and so-called In-Factory Provisioning (IFPP) management keys are derived from the master key;
b) the step of transferring the master key and/or the IFPP management keys to an In-Factory Provisioning (IFPP) server;
c) the step of providing a device for communication in a mobile communication network, said device comprising an eUICC;
d) the step of providing the eUICC with a script, namely a so-called preScript, containing data in a protected form, wherein said data are encrypted by the IFPP management keys and are required to set the eUICC to the In-Factory mode;
e) the step of providing the eUICC with a Bound Profile Package (BPP);
f) the step of providing the eUICC with a script, namely a so-called postScript, in order to remove the data inserted by the preScript;
g) the step of collecting at least the installation results of steps e) and f) and forwarding the collected data to the IFPP server.

Document [1] (GlobalPlatform Technology Secure Channel Protocol '03' Card Specification v2.3
- Amendment D Version 1.1.2 Public Release March 2019) describes a secure channel protocol based on AES (Advanced Encryption Standard) keys and specifies:
   - a mechanism to generate session keys;
   - schemes to be used with AES for C-MAC (Cipher-based MAC (Message Authentication Code); C-MAC is the abbreviation used for the MAC appended to command APDUs), R-MAC (Response MAC), command data field encryption and response data field encryption;
   - a format of PUT KEY for AES.

The protocol is based on existing SCP01 and SCP02 protocols. It supports AES-based cryptography instead of TDEA (Triple Data Encryption Algorithm). The protocol protects bidirectional communication between the Host and the card (decryption/MAC verification for incoming commands, encryption/MAC generation on card response). The Secure Channel is used to personalize cards at Issuance and during Post-Issuance. The mode of the Secure Channel Protocol which uses pseudo-random card challenges allows the offline preparation of personalization scripts while the card is not present and the processing of these scripts on the card without an online connection to the entity that prepared the scripts.

In particular, the present invention makes use of the Secure Channel Protocol described in Document [1] to send a script, a so-called preScript, to add a production certificate before the loading of the profile and another script, a so-called postScript, after the installation of the profile to remove the production certificate. The production certificate is a suitable means in order to determine whether the production facility manufacturing a device, for example, an IoT device, is trustable.

According to a preferred embodiment, the inventive method comprises the following steps 1) to 5):
1) During data generation, a so-called master key is generated, in particular an AES key, on the basis of which either a random set of Secure Channel Protocol '03' keys as described in Document [1] is generated and protected using the master key (Option 1), or a set of Secure Channel Protocol '03' keys, based on the master key, as described in Document [1] is derived together with additional derivation data (i.e. C-MAC(master_key, EID | | KID), wherein EID is the abbreviation of eUICC Identifier and KID is the abbreviation of Key and Algorithm Identifier for RC/CC/DS) (Option 2). Then, the master key is transferred to an In-Factory Provisioning server, in particular an SGP.41/SGP.42 compliant IFPP server such as an SM-DPf (Subscription Manager Data Preparation for IFPP). In case random keys are used, the keys are provided, too.
2) During eUICC production, each set of keys identified by the EID are loaded to the eUICC.
3) During device production, for example during the manufacturing of an IoT device, the original equipment manufacturer (OEM) will request a profile from the IFPP server and the following will be delivered (wherein preScript and postScript are protected using either a random set of Secure Channel Protocol '03' keys as described in Document [1] or a set of Secure Channel Protocol '03' keys, based in the master key, as described in Document [1] derived together with additional derivation data (i.e. C-MAC(master_key, EID | | KID)):
   - preScript: contains the data which are required in order to set the eUICC to the In-Factory mode (in particular IFPP keys and IFPP validation certificates), wherein the data are protected by using a Secure Channel Protocol '03' sequence of commands as described in Document [1] (in particular at least C-MAC and R-MAC).
   - Bound Profile Package (BPP), as defined for example in SGP.22 v3.1.
   - postScript: removes the data inserted by preScript protected by using a Secure Channel Protocol '03' sequence of commands as described in Document [1] (in particular at least C-MAC and R-MAC).
   Upon the execution, the original equipment manufacturer (OEM) collects at least the result of the installation of the Bound Profile Package (BPP) and the output of the postScript execution. Then, these data are forwarded to the IFPP server.
4) On the side of the IFPP server, the following steps are conducted:
   - Once the data is received the profile installation result will be verified, for example as defined in SGP.22 v3.1, and then the output of the postScript execution will be analyzed.
   - If no output was provided, or if the verification of the R-MAC of the expected output data fails, a status will be registered and the Mobile Network Operator (MNO) will be notified by using the interface ES2+(defined, for example, in SGP.22 v3.1), i.e. a new notification type to indicate an abnormal status for that profile installation.
   - If no issue was found, the IFPP server will continue the operation as usual.
5) Then, if the Mobile Network Operator (MNO) receives an abnormal status, the MNO might restrict the connectivity of such a profile or might take any preventive measures.

The method described above allows the device to have a disabled In-Factory Profile Provisioning mode when in-field, while being able to reactivate the In-Factory Profile Provisioning mode on the premises of the original equipment manufacturer (OEM).

Further aspects, features and advantages of the present invention will become apparent to those of ordinary skills in the art upon reviewing the following detailed description of preferred embodiments and variants of the present invention in conjunction with the accompanying figures.

Reference will now be made to the accompanying figures, in which:

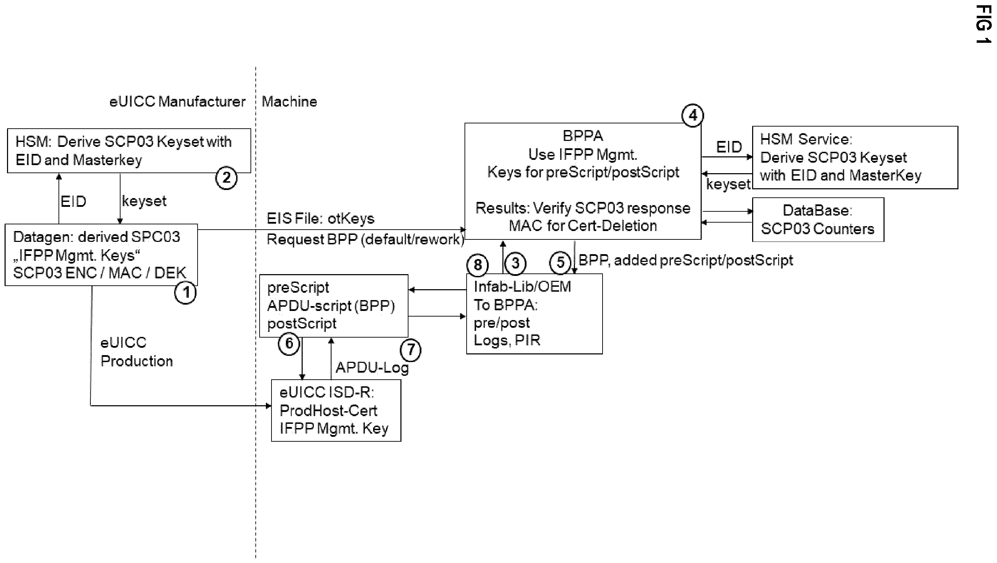

FIG. 1 shows a flow chart of the inventive method for manufacturing an embedded universal integrated circuit card (eUICC) device according to an embodiment.

In conjunction with the flow chart shown in FIG. 1 an embodiment of the inventive method for manufacturing an embedded universal integrated circuit card (eUICC) device is described comprising the following steps 1) to 8):
1) The eUICC manufacturer produces the eUICC and personalizes the same by using individual data, e.g. the EID (eUICC identifier). Further, the generation of a HSM(Hardware Security Module)-derived Secure Channel Protocol '03' keyset as described in Document [1] called "IFPP Mgmt. Keys" is conducted. A HSM is a physical computing device that safeguards and manages digital keys, performs encryption and decryption functions for digital signatures, strong authentication and other cryptographic functions.
2) Actions performed by the HSM(Hardware Security Module): Beside other credentials for the eUICC data generation, the HSM secretly holds the master key for Secure Channel Protocol '03' keyset derivation and conducts the derivation process. The data generation ("DataGen") requests the derivation by sending the EID for a newly produced eUICC. Then the HSM derives the Secure Channel Protocol '03' keyset ("IFPP Mgmt. Keys") consisting of the three key components Key-ENC, Key-MAC and Key-DEK from the EID and the master key as described in Document [1].
3) Original equipment manufacturer (OEM): The OEM runs an application ("Infab-Lib") to request new secured eSIM profiles from a remote BPPA(Bound Profile Package Aggregator) server, in particular an SGP.41/SGP.42 compliant IFPP server such as an SM-DPf (Subscription Manager Data Preparation for IFPP), to prepare upcoming device production. The application knows the EIDs of the respective eUICCs to be produced and sends a "Request BPP(Bound Profile Package)" to the BPPA server. The term BPP(Bound Profile Package) is specified in SGP.22 GSMA RSP Technical Specification Version 3.1 and describes a Protected Profile Package that has been cryptographically linked to a particular eUICC.
4) BPPA(Bound Profile Package Aggregator) server: The BPPA server will get the EID of each single request for a secured BPP from the original equipment manufacturer (OEM). The BPPA server decides, whether an additional, aforementioned preScript and/or an additional, aforementioned postScript has to be generated and added to the secured BPP result. Therefore, the BPPA server will ask its connected HSM Service with a HSM(Hardware Security Module) to derive Secure Channel Protocol '03' keyset components consisting of the three key components Key-ENC, Key-MAC and Key-DEK, analogous to the above-mentioned step 2). The BPPA server also comprises a database which contains the current value of a Secure Channel Protocol '03' counter for each EID. This counter is used for calculations of the Secure Channel Protocol '03' cryptograms and protects them from replay attacks (part of the GlobalPlatform Secure Channel Protocol '03' standard).
   By using the Secure Channel Protocol '03' keyset and the actual counter value, the BPPA server can now encrypt various GlobalPlatform APDU scripts, which can e.g. include GlobalPlatform commands like PUT KEY Command, DELETE KEY Command or STORE DATA Command to achieve various use cases for management of the eUICC's security domain that comprises One-time keys (OtKeys) or certificates for IFPP.
   Those generated Secure Channel Protocol '03' secured scripts are then appended to the regular encrypted eSIM profile (BPP) in the resulting response file, called preScript (to be executed before eSIM loading) or postScript (to be executed after eSIM loading).
5) The OEM runs an application ("Infab-Lib") to request new secured eSIM profiles from a remote BPPA server. The Infab-Lib receives the BPP and the optional preScript and/or postScript from the BPPA server, transforms it to an executable APDU script and forwards it to the OEM's production machine.
6) OEM production machine: The OEM production machine connects to the eUICC contained in the OEM device and executes, for a specific EID, the dedicated APDUs from the preScript, the secured eSIM profile in the BPP (known, for example, from GSMA SGP.41) and the postScript.
7) The APDU results from each command, also from the preScript and postScript, are sent back to the production machine and are collected in a Response log (explanatory note: a log file is a text file or XML file used to register the automatically produced and time-stamped documentation of events, behaviors and conditions relevant to a particular system).
8) The resulting logs including the results from the preScript and/or postScript will be collected and sent back to the BPPA server for evaluation. The results of Secure Channel Protocol '03' secured APDUs (e.g. the result for the command GET EID) can contain MAC values according to the GlobalPlatform standard which can be verified by the BPPA server later, because the BPPA server knows the Secure Channel Protocol '03' keys for the respective EID. On the basis of this Secure Channel Protocol '03' MAC-verification that mandates sequent execution of the preScript/postScript APDU list, it can be ensured that the script has been fully executed and no command has been skipped or altered.

### General remarks:

A particular idea underlying the present invention is to enable the BPPA server to generate secured APDU scripts which are transferred along with the secured eSIM profile (i.e. Bound Profile Package, BPP) to the OEM's production machine.

A particularly advantageous effect is the fact that it is not needed for the OEM production site to inject commands. All secured APDUs are generated on the BPPA server side with knowledge of an eUICC-individual key material, by the help of key-derivation using a common master key on both ends, i.e. SIM production and BPPA server HSM.

The above-mentioned description mentions Secure Channel Protocol '03' (standardized by GlobalPlatform) as an example in order to secure APDUs with symmetric AES keys. One SCP '03' keyset contains three key components according to GlobalPlatform, called ENC, MAC and DEK key. However, the present invention is not limited thereto, i.e. further secure ways to protect APDU scripts can be applied, e.g. so-called SCP11c using asymmetric keys on eUICC and BPPA server side.

### Secure Channel Protocol '03' key distribution:

One SCP '03' keyset for this use case should be personalized in the security domain of the eUICC. The same SCP '03' keyset must be known on the BPPA server to secure the APDUscript.

There are multiple ways to achieve that, for example:
1) SCP '03' derivation:
   Based on a common secret, the master key, between eUICC production site and the BPPA server, the eUICC-individual SCP '03' keyset keys ENC, MAC, DEK can be derived. Preferably, the EID is proposed as a derivation parameter, because the EID will be known to all components and is individual per eUICC.
2) Random key generation:
   Alternatively each eUICC could be personalized with randomly generated SCP '03' keys for ENC, MAC and DEK. Then, an output file mechanism has to be established to securely transfer all keys to the BPPA server for later APDU-encryption.

## Claims

1. Method for manufacturing an embedded universal integrated circuit card (eUICC) device, said method comprising:
a) the step of conducting a data generation step, in which a so-called master key is generated and so-called In-Factory Provisioning (IFPP) management keys are derived from the master key;
b) the step of transferring the master key and/or the IFPP management keys to an In-Factory Provisioning (IFPP) server;
c) the step of providing a device for communication in a mobile communication network, said device comprising an eUICC;
d) the step of providing the eUICC with a script, namely a so-called preScript, containing data in a protected form, wherein said data are encrypted by the IFPP management keys and are required to set the eUICC to the In-Factory mode;
e) the step of providing the eUICC with a Bound Profile Package (BPP);
f) the step of providing the eUICC with a script, namely a so-called postScript, in order to remove the data inserted by the preScript;
g) the step of collecting at least the installation results of steps e) and f) and forwarding the collected data to the IFPP server.

2. Method according to claim 1, wherein in step a) the master key is an Advanced Encryption Standard (AES) key.

3. Method according to claim 1 or 2, wherein in step a) the IFPP keys are derived from the master key and an EID.

4. Method according to claim 3, wherein the IFPP keys contain three key components, namely ENC, MAC and DEK key, as specified in GlobalPlatform Technology Secure Channel Protocol '03' Card Specification v2.3 - Amendment D Version 1.1.2 Public Release March 2019.

5. Method according to claim 1 or 2, wherein in step a) the IFPP keys are randomly generated Secure Channel Protocol '03' keys as specified in GlobalPlatform Technology Secure Channel Protocol '03' Card Specification v2.3 - Amendment D Version 1.1.2 Public Release March 2019.
